Europäisches Patentamt

European Patent Office

Office européen des brevets

(11) Publication number: **0 173 746**
A1

# EUROPEAN PATENT APPLICATION

published in accordance with Art. 158(3) EPC

(21) Application number: **85900773.4**

(22) Date of filing: **08.02.85**

Data of the international application taken as a basis:

(86) International application number:
**PCT/JP85/00055**

(87) International publication number:
**WO85/03786 (29.08.85 85/19)**

(51) Int. Cl.⁴: **G 06 F 13/14**

(30) Priority: **22.02.84 JP 32018/84**

(43) Date of publication of application:
**12.03.86 Bulletin 86/11**

(84) Designated Contracting States:
**DE FR GB**

(71) Applicant: **FANUC LTD**
3580, Shibokusa Aza-Komanba Oshino-mura
Minamitsuru-gun Yamanashi 401-05(JP)

(72) Inventor: **INOUE, Michiya**
5-28-6, Nishihirayama
Hino-shi Tokyo 191(JP)

(74) Representative: **Billington, Lawrence Emlyn et al,**
HASELTINE LAKE & CO Hazlitt House 28 Southampton
Buildings Chancery Lane
London WC2A 1AT(GB)

(54) **METHOD OF SELECTING ADDRESS IN INPUT/OUTPUT BOARD.**

(57) Method of selecting a desired address in a plurality of input/output boards (2 to 4) connected to common buses (6). In the method, the need to effect addressing for the input/output boards (2 to 4) is eliminated, and maintenance of the input/output boards (2 to 4) is facilitated. For this purpose, a programmable address converter circuit (5) is provided which generates slot selection signals (sl to s16) and an in-board address (BA) from an address for accessing the input/output boards (2 to 4) which is output from a microprocessor (CPU) on a CPU board (1). One of the plurality of input/output board (2 to 4) is selected by the slot selection signals (s1 to s16) from the address converter circuit (5), and one of the addresses in the selected input/output board is selected by the in-board address (BA).

FIG. 1

Croydon Printing Company Ltd

- 1 -

S P E C I F I C A T I O N

SYSTEM FOR SELECTING AN ADDRESS
IN AN INPUT/OUTPUT BOARD

TECHNICAL FIELD

The present invention relates to a system for selecting
an address in pluralities of input and output boards connected
to a common bus.

BACKGROUND ART

In numerical control equipment or similar control
apparatus, output signals for controlling a machine tool or
like controlled system, such as ON, OFF signals and so forth,
and input signals indicating various states of the controlled
system, such as ON, OFF signals and so on, are provided via
pluralities of input boards and output boards connected to a
common bus. The common bus is usually made up of (1) at least
one data line for transmitting data, (2) an address line for
specifying the destination of data transmission and (3) a
control line for specifying a read or write of data and controlling the timing therefor.

In this instance, the destination of data transmission
is specified by sending a coded address of the destination
over the address line. Each board connected to the common bus
monitors the state of the address line and, when the state of
the address line matches the address inherent to the board,
recognizes that it is selected as the destination of data
transmission. Therefore, each board needs to be assigned an address inherent thereto. On the other hand, numerical control equipment or the like may sometimes employ pluralities of input and output boards of the same kind, in which case it is necessary to hold the inherent address of each board variable. In general, this is implemented by address setting on hardware for each board. Accordingly, in the case of employing such boards, it is necessary to perform address setting for each of them although they are of the same kind, and this setting constitutes an obstacle to their maintenance.

DISCLOSURE OF THE INVENTION

An object of the present invention is to eliminate the necessity of address setting for each input or output board.

Another object of the present invention is to facilitate maintenance and exchange of each input or output board.

According to the present invention, in the input/output board address selection system which selects a desired address in pluralities of input and output boards connected to a common bus, a programmable address translation circuit is provided which derives a slot select signal and an in-board address from an address for accessing the input or output board which is provided from a microprocessor of a CPU board. One of the input and output boards is selected by the slot select signal available from the address translation circuit, and one of addresses in the selected input or output board is selected by the in-board address from the address translation circuit.

BRIEF DESCRIPTION OF THE DRAWINGS

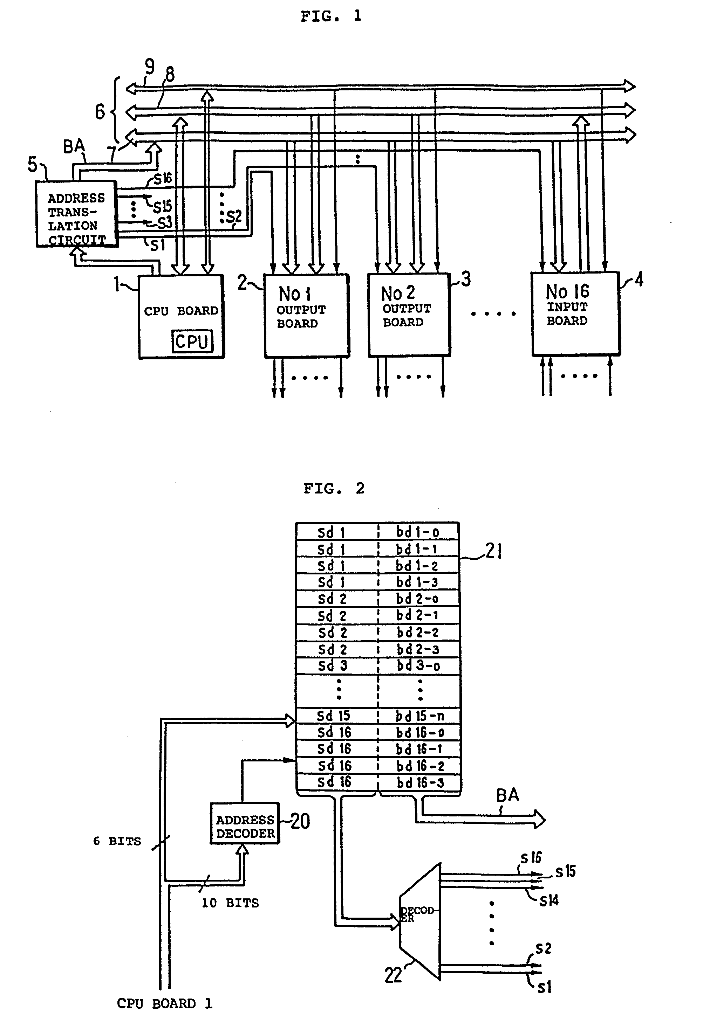

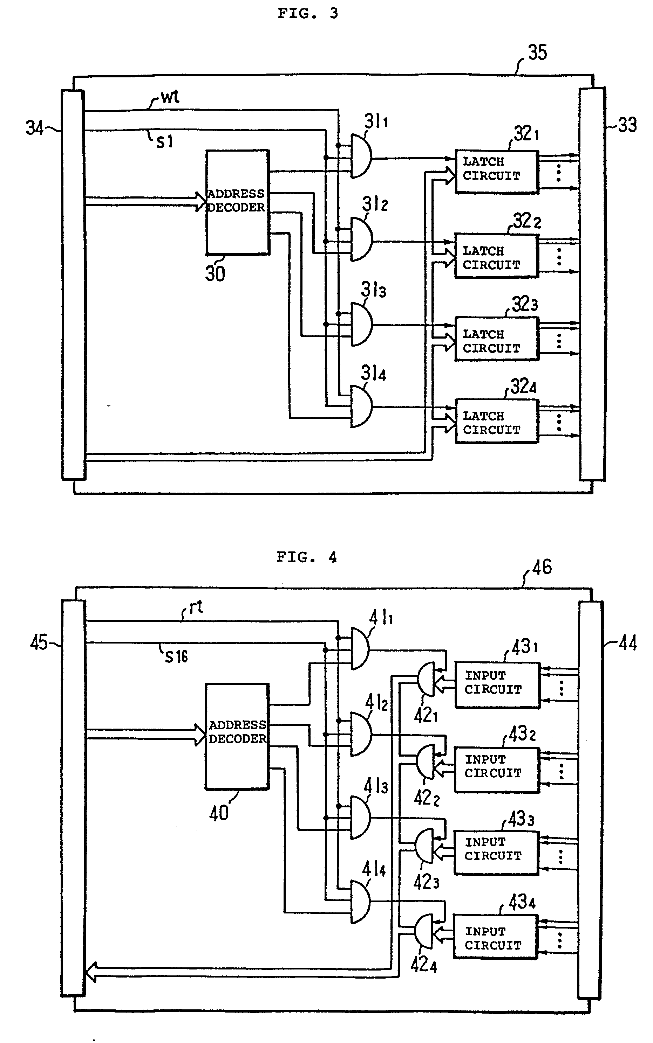

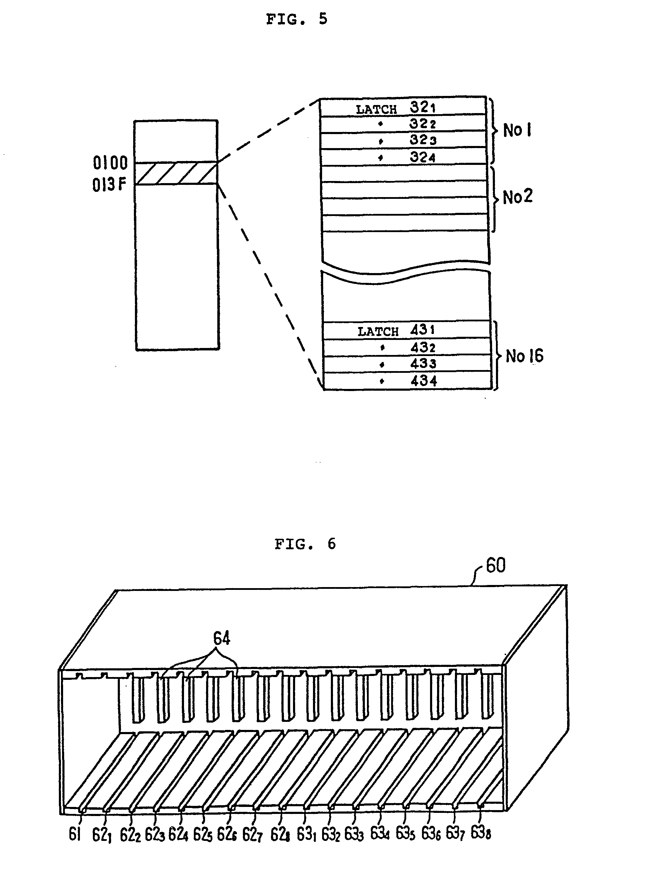

Fig. 1 is a block diagram illustrating the principal part of an embodiment of the present invention; Fig. 2 is a block diagram showing the principal part of an example of an address translation circuit 5; Fig. 3 is a block diagram showing the principal part of an example of an output board 2; Fig. 4 is a block diagram showing the principal part of an example of an input board 4; Fig. 5 is a diagram explanatory of the address space of a microprocessor in a CPU board 1; and Fig. 6 is a rough sketch of a back panel for housing the CPU board and input and output boards.

BEST MODE FOR CARRYING OUT THE INVENTION

In Fig. 1, reference numeral 1 indicates a CPU board, 2 a No. 1 output board, 3 a No. 2 output board, 4 a No. 16 input board, 5 an address translation circuit and 6 a common bus. The common bus 6 comprises an address line 7, a data line 8 and a control line 9. The CPU board 1 has loaded therein a microprocessor CPU and a ROM or RAM for storing predetermined programs. The microprocessor has its address bus connected to the address translation circuit 5, its data bus connected to the data line 8 and its control line connected to the control line 9. The address translation circuit 5 decodes an address from the CPU board 1 to create therefrom slot select signals s1 to s16 and an in-board address BA, and provides the in-board address BA on the address line 7 and the slot

select signals s1 to s16 to the corresponding input and output
boards 2 to 4.  That is to say, the address translation circuit
sends the slot select signal s1 to the No. 1 output board 2,
the slot select signal s2 to the No. 2 output board 3, the slot
select signal s16 to the No. 16 input board 4 and the slot
select signals s3 to s15 to the remaining thirteen input and
output boards not shown.  Furthermore, the input and output
boards 2 to 4 each have loaded thereon an address decoder,
various gate circuits, input circuits, latch circuits, etc.,
as described later, and they are connected to the address line
7, the data line 8 and the control line 9 and are supplied
with the slot select signals s1 to s16 via transmission lines.

Fig. 2 illustrates in block form the principal part
of an example of the address translation circuit 5.  Ten
higher-order bits of 16-bit address sent out from the CPU
board 1 are applied to an address decoder 20, and the six
lower-order bits to a ROM 21.  The address decoder 20 is provided
for the microprocessor CPU of the CPU board 1 to select the
ROM 21.  The ROM 21 has a total of 64 storage areas which
have a one-to-one correspondence to the input and output boards
2 to 4.  In each area slot select information sd1 to sd16 are
stored in four higher-order bits and in-board address infor-
mation bd1-0 to bd16-3 in four lower-order bits.  When selected
by the address decoder 20, the ROM 21 outputs the stored
information from the area corresponding to the input or output board of the number specified by the input 6-bit address.  The slot select information sd1 to sd16 are provided to a decoder 22, and the in-board address information bd1-0 to bd16-3 are provided as the in-board address BA on the address line 7.  The decoder 22 decodes the slot select information sd1 to sd16 to create the above-mentioned slot select signals s1 to s16. Incidentally, it is also possible to increase the capacity of the ROM 21, leaving out the decoder 22.  The ROM 21 may also be formed by a PLL.  Moreover, the replacement of the ROM 21 with a RAM adapted to be accessible from the CPU board 1 will be convenient since the slot select information sd1 to sd16 and the in-board address information bd1 to bd16 can be rewritten in accordance with a modification of the system configuration. In this instance, however, it is necessary to provide a circuit for connecting the data line 8 of the CPU board 1 to the data input of the RAM and a circuit for inhibiting the operation of the Nos. 2 to 4 input and output boards during a write of address translation data into the RAM.

Fig. 3 illustrates in block form the principal part of an example of the output board 2.  Reference numeral 30 indicates a decoder for decoding an address on the address line 7, its output being input into AND circuits $31_1$ to $31_4$.  The AND circuits $31_1$ to $31_4$ are each supplied with a write timing signal wt from the control line 9 and the slot select signal s1 as well, and their outputs are provided as latch timing signals to latch

circuits $32_1$ to $32_4$ respectively corresponding thereto. The latch circuits $32_1$ to $32_4$ are supplied at the input with data from the data line 8, and their outputs are sent to a connector 33. When 8-bit parallel data is sent out from the data line 8, the capacity of each of the latch circuits $32_1$ to $32_4$ is also held 8-bit, and the latched 8-bit data is read out in parallel for output to the connector 33. A relay circuit or the like, not shown, is connected to the connector 33 to perform control corresponding to the latched contents of the latch circuits. Reference numeral 34 identifies a connector and 35 a substrate.

Fig. 4 illustrates in block form the principal part of an example of the input board 4. Reference numeral 40 designates a decoder for decoding an address on the address line 7, its output being input into AND circuits $43_1$ to $41_4$. The AND circuits $41_1$ to $41_4$ are each supplied with a read timing signal rt from the control line 9 and the slot select signal s16 as well, and their outputs are applied as gate signals to AND circuits $42_1$ to $42_4$ respectively corresponding thereto. The AND circuits $42_1$ to $42_4$ are supplied at the other input with outputs of input circuits $43_1$ to $43_4$, and their outputs are provided via a connector 45 on the data line 8. The inputs of the input circuits $43_1$ to $43_4$ are connected to a connector 44, to which is input contact information or the like from a controlled system such as a machine tool or the like. Reference numeral 46 represents a substrate.

The address space of the microprocessor CPU in the CPU board 1 is such, for example, as shown in Fig. 5. A 64-byte area from 0100 to 013F is assigned for the input and output boards. Its four higher-order bytes are allocated to the No. 1 output board 2 (Each byte has a one-to-one correspondence to the latch circuits $32_1$ to $32_4$. This applies also in the following.), the next four bytes to the No. 2 output board 3, four lower-order bytes to the No. 16 input board and the remaining bytes to Nos. 3 to 15 input and output boards, respectively. When the microprocessor CPU accesses an input or output board, an address in the abovesaid area is sent out from the CPU board 1. Further, data is provided on the data line 8 and the write timing signal wt or read timing signal rt is provided on the control line 9. For instance, in the case of rewriting data in the latch circuit $32_1$ of the output board 2, an address 0100 is applied from the CPU board 1 to the address translation circuit 5. In the address translation circuit 5, as depicted in Fig. 2, the 10 higher-order bits of the address are decoded by the address decoder 20, by which the ROM 21 is selected, and the slot select information sd1 for the No. 1 output board and the in-board address information bd1-0 are read out by the six lower-order bits of the address from the ROM 21. As a result of this, the slot select signal s1 is applied from the decoder 22 to the output board 2 and the in-board address information bd1-0 is provided on the
address line 7. The address decoder 30 in the output board
2 decodes the input in-board address information bd1-0 and
provides a "1" output to the AND circuit $31_1$. When supplied
with the slot select signal s1 and the write timing signal, the
AND circuit $31_1$ provides a "1" output, sending the latch timing
signal to the latch circuit $32_1$. At this timing data on the
data line is latched in the latch circuit $32_1$. Writes in the
other latch circuits $32_2$ to $32_4$ and the latch circuits in the
other output boards are also similarly effected. Also an
address selection for reading out input information from the
input circuits $43_1$ to $43_4$ of the input board 4 takes place in
the same manner as in the case of the above write operation.

Fig. 6 is a rough sketch of a back panel for housing
the CPU board and the input and output boards. The back panel,
indicated by 60, has slots 61 for receiving the CPU board 1,
for instance, eight slots $62_1$ to $62_8$ for receiving the output
boards and, for example, eight slots $63_1$ to $63_8$ for receiving
the input boards. On the inside of the back panel 60 are
mounted connectors 64 corresponding to the slots, respectively.
The connectors are to connect the common bus and the transmission lines for the slot select signals s1 to s16 to the
connectors 34 and 35 of the boards inserted into the slots,
thereby connecting the boards to the common bus and the transmission lines for the slot select signals s1 to s16. It is predetermined which of the slot select signals s1 to s16 are connected to which of the connectors 64. In the event that the contents of the ROM 21 of the address translation circuit 5 are predetermined, the addresses of the input and output boards are unequivocally determined according to the positions of the slots into which the boards are inserted. Accordingly, a modification of hardware on each input or output board does not necessitate address setting unlike in the prior art. Therefore, for example, in the case of exchanging a certain malfunctioning input or output board, it is necessary only to pull it out and insert a new input or output board into the slot. The maintenance is very easy.

While in the above embodiments four addresses are assigned to each input or output board, a desired number of addresses can be assigned. In the case of a system including input and output boards with different numbers of addresses assigned thereto, for example, several four-address input and output boards and several three-address input and output boards, the boards assigned the same number of addresses can be made identical in construction. This can easily be dealt with by rewriting the contents of the ROM 21 of the address translation circuit 5.

As has been described in the foregoing, according to the present invention, in an input/output board address selection system which selects a desired one of addresses in one of pluralities of input and output boards connected to a common bus, a programmable address translation circuit is provided for creating a slot select signal and an in-board address from an address for accessing the input or output board which is provided from a microprocessor of a CPU board. One of the input and output boards is selected by the slot select signal from the address translation circuit, and one address in the selected input or output board is selected by the in-board address provided on the common bus from the address translation circuit. Since each board can detect by the slot select signal whether it is selected or not, the in-board address which is provided on the common bus can be made to have contents overlapping between the respective input and output boards. Accordingly, decoders which are provided in the input and output boards for decoding the in-board address can be made identical in construction. This eliminates the necessity of address setting on each input or output board which has been needed in the past, and hence facilitates maintenance of the system. Moreover, by defining the translation contents of the address translation circuit in accordance with the system configuration, the address space of the microprocessor can effectively be utilized even in the case where input and output boards with different numbers of addresses are provided in combination.

C L A I M

An input/output board address selection system which selects a desired address in one of pluralities of input and output boards connected to a common bus, characterized in that a programmable address translation circuit is provided for creating a slot select signal and an in-board address from an address for accessing one of the input and output boards which is provided from a microprocessor of a CPU board; one of the pluralities of input and output boards is selected by the slot select signal from the address translation circuit; and one of addresses in the selected input or output board is selected by the in-board address which is provided on the common bus from the address translation circuit.

**FIG. 1**

**FIG. 2**

FIG. 3

FIG. 4

FIG. 5

FIG. 6

# INTERNATIONAL SEARCH REPORT

International Application No. PCT/JP85/00055

## I. CLASSIFICATION OF SUBJECT MATTER (if several classification symbols apply, indicate all) ³

According to International Patent Classification (IPC) or to both National Classification and IPC

Int. Cl⁴ G06F 13/14

## II. FIELDS SEARCHED

| Minimum Documentation Searched ⁴ | |
|---|---|
| Classification System | Classification Symbols |
| IPC | G06F 13/14, G06F 3/00 |

| Documentation Searched other than Minimum Documentation to the Extent that such Documents are Included in the Fields Searched ⁵ |
|---|
| Jitsuyo Shinan Koho      1956 – 1984<br>Kokai Jitsuyo Shinan Koho      1971 – 1984 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP, A, 57-172430 (Sakaguchi Nobuaki)<br>23 October 1982 (23. 10. 82) Page 2<br>(Family nashi) | 1 |
| X | JP, A, 57-207924 (Fuji Electric Co., Ltd.)<br>20 December 1982 (20. 12. 82) Page 2<br>(Family nashi) | 1 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| March 27, 1985     (27. 03. 85) | April 8, 1985     (08. 04. 85) |
| International Searching Authority ¹ | Signature of Authorized Officer ²⁰ |
| Japanese Patent Office | |

Form PCT/ISA/210 (second sheet) (October 1981)